# EUROPEAN PATENT SPECIFICATION

(11) **EP 1 303 677 B1**
(45) Date of publication and mention of the grant of the patent: **23.01.2008**
(21) Application number: 01953519.4
(22) Date of filing: 18.07.2001
(51) Int. Cl.: E05B 73/00

(54) **LOCKABLE MEDIA STORAGE BOX WITH LOCK AND KEY**
VERRIEGELBARER MEDIENSPEICHERBEHÄLTER MIT SCHLOSS UND SCHLÜSSEL
BOITIER DE STOCKAGE DE SUPPORT VERROUILLABLE AVEC VERROU ET CLE

(30) Priority: 18.07.2000 US 618652; 13.11.2000 US 711807
(43) Date of publication of application: 23.04.2003
(73) Proprietor: Nexpak Corporation, North Canton, Ohio 44720 (US)
(72) Inventor: BELDEN, Dennis, D., Jr., Canton, OH 44718 (US); BURDETT, Ronald, K., Strasburg, OH 44680 (US); SEDON, Nicholas, M., Massillon, OH 44646 (US); MARSILIO, Ronald M., Canton,Ohio 44721 (US)
(74) Representative: Hanson, William Bennett
(86) International application number: PCT/US2001/022476
(87) International publication number: WO 2002/007152

(56) References cited:
- EP-A- 0 483 422
- EP-A- 0 589 551
- WO-A-00/17877
- WO-A-90/04548
- NL-C- 1 000 900
- US-A- 4 381 836
- US-A- 4 567 983
- US-A- 4 658 955
- US-A- 5 039 982
- US-A- 5 133 470
- US-A- 5 375 708
- US-A- 5 944 185
- US-A- 5 988 376

## Description

### BACKGROUND OF THE INVENTION

### 1. Technical Field

The present invention is generally related to media storage boxes and, more particularly, to lockable media storage boxes.

### 2. Background Information

Renting items of recorded media such as video cassettes and video games has become immensely popular in recent times given the ever increasing number of items available for home viewing and use as well as the decrease in price of the machines that play the media. Typical rental stores display the items available for rental in storage boxes that protect the items from dust, ultraviolet light, and damage from impact if accidentally dropped. Stores protect themselves against theft by placing one or more EAS tags on or inside the item of recorded media. An EAS tag is adapted to activate an alarm when passed through a sensing device that may be disposed around the exit of the store. It is generally desirable to place the EAS tags in places where they cannot be easily removed by a shoplifter.

A rental establishment typically places older rental stock out for sale when it no longer needs the item for rental. When items are put out for sale, the EAS tags are removed from the items and reused on items that are being rented. The EAS tags are removed from the items of recorded media prior to sale so that the purchaser will not activate the alarm systems in other stores with the EAS tags. Without the EAS tags in the items themselves, a rental store must protect itself against shoplifting by placing an EAS tag on the storage container holding the item for sale. It is desirable that the EAS tag be placed on the storage container in a way that allows a sales clerk to quickly and easily remove the tag after the sale is made but also in a manner that prevents a shoplifter from easily removing the tag. Placement of the EAS tag in such a position is, however, difficult because a storage container provides few, if any, areas where the EAS tag may be hidden. If the EAS tag is placed on the storage container in a fashion such that it can be easily removed, a shoplifter may simply remove the tag and steal the item without activating the alarm. It is thus desired in the art to provide a storage container suitable for holding and displaying an item of recorded media during display for rental that has locking holes that can later accept a lock containing an EAS tag when the container is used to sell an item.

Such a storage box and lock combination must be configured to prevent the thief from simply breaking the lock off the storage box with a small pry bar. Although the storage box and lock must be relatively strong, the cost of manufacturing the lock and storage box must not be prohibitive. It is thus also desired in the art to provide a relatively inexpensive storage box and lock and key combination that securely locks the storage box while preventing a pry bar from being inserted between the lock and the storage box.

Document WO 017877 describes a security storage container according to the preamble of claim 1.

### SUMMARY OF THE INVENTION

The present invention provides a lockable media storage container according to claim 1. Preferred or optional features of the invention are set out in the dependent claims.

### BRIEF DESCRIPTION OF THE DRAWINGS

Fig. 54 is a perspective view of an embodiment of the security storage container of the present invention.
Fig. 55 is a view similar to Fig. 54 with the lock inserted within the lock reception cavity.
Fig. 56 is a sectional view taken along line 56-56 of Fig. 55.
Fig. 59 is a perspective view of another embodiment of the security storage container of the present invention.
Fig. 60 is a sectional view taken along line 60-60 of Fig. 59.
Fig. 105 is a perspective view of another embodiment of the security storage container of the present invention showing the lock removed from the container.
Fig. 106 is a perspective view of the security storage container of Fig. 105 with the lock in the locked position.
Fig. 107 is a top plan view of the security storage container of Fig. 105 in an open, unlocked position.
Fig. 108 is a sectional view taken along line 108-108 of Fig. 105.
Fig. 109 is a sectional view taken along line 109-109 of Fig. 106.
Fig. 110 is a perspective view of another example of a security storage container not of the present invention showing a lock removed from the container.
Fig. 111 is a perspective view of the security storage container of Fig. 110 with the lock in the locked position.
Fig. 112 is a sectional view taken along line 112-112 of Fig. 111 from just inside the front of the lock.
Fig. 113 is a sectional view taken along line 113-113 of Fig. 112.
Fig. 114 is a sectional view taken along line 114-114 of Fig. 112.
Fig. 115 is a view similar to Fig. 112 showing the lock in the locked position.
Fig. 116 is a view similar to Fig. 114 showing a key being used to move the lock to the unlocked position.
Fig. 117 is a view similar to Fig. 116 showing the lock being removed from the container.

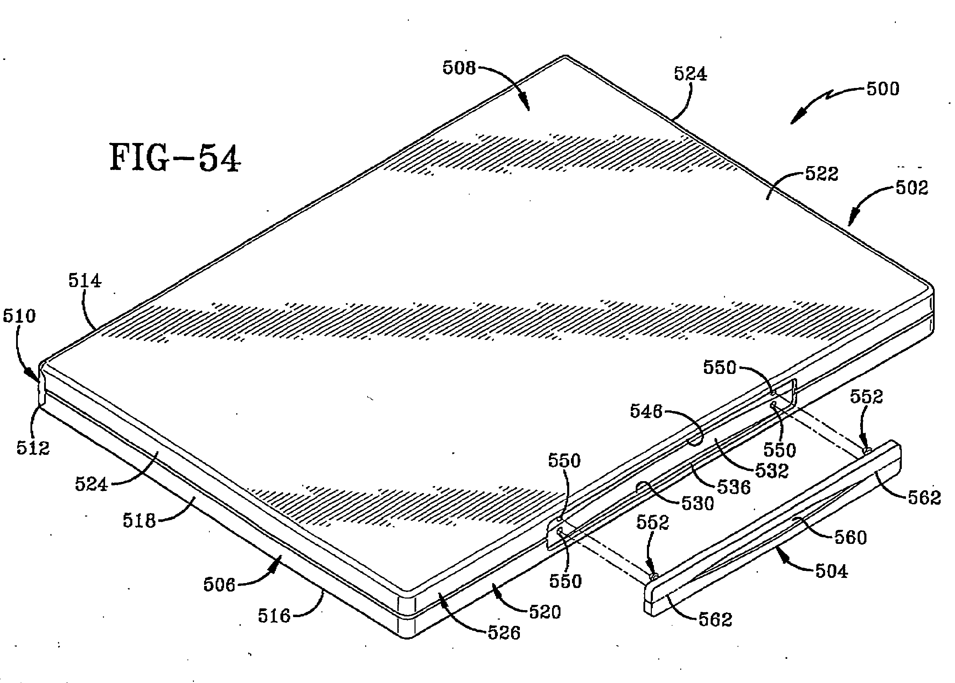

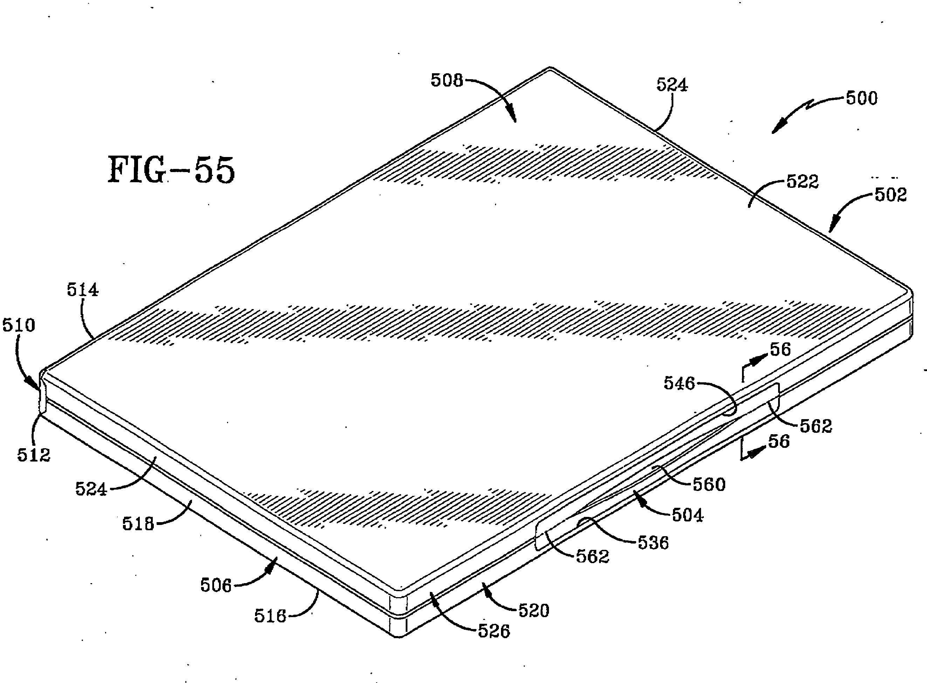

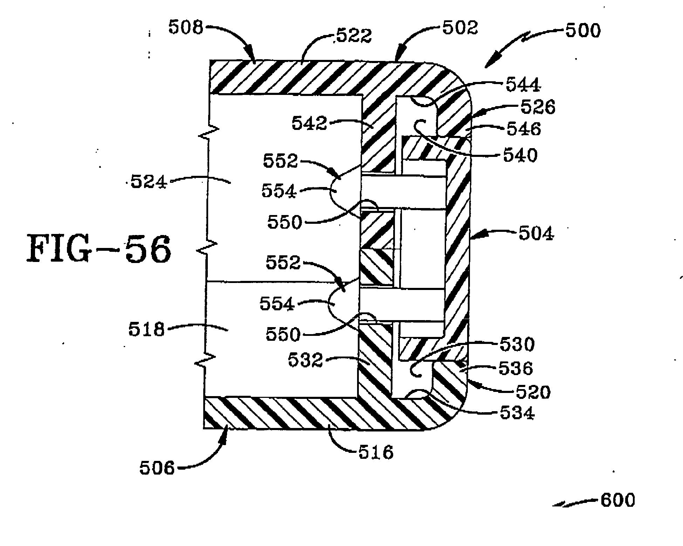

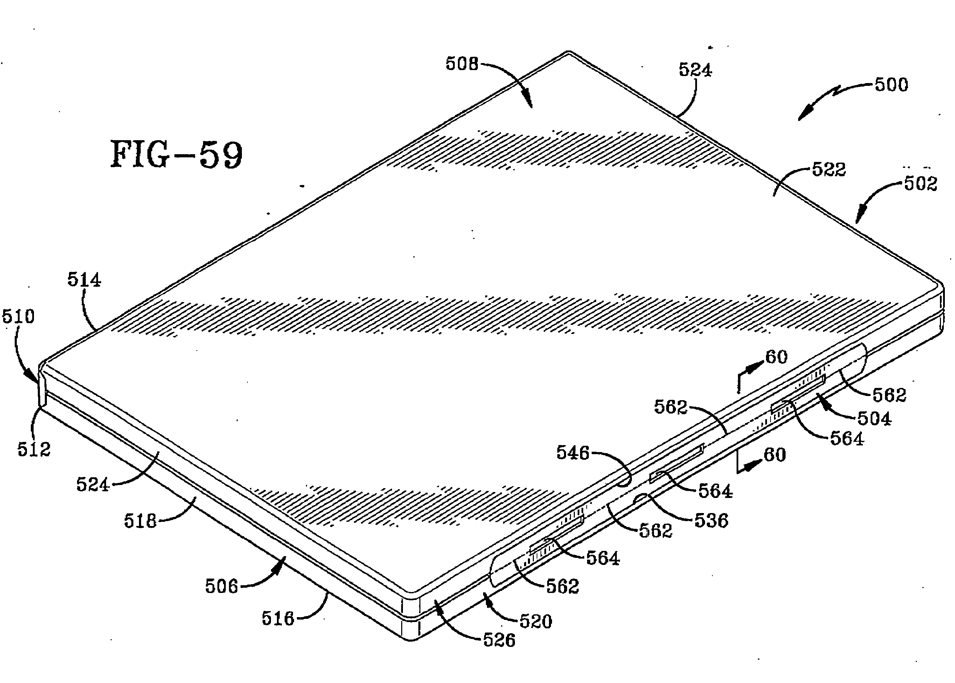

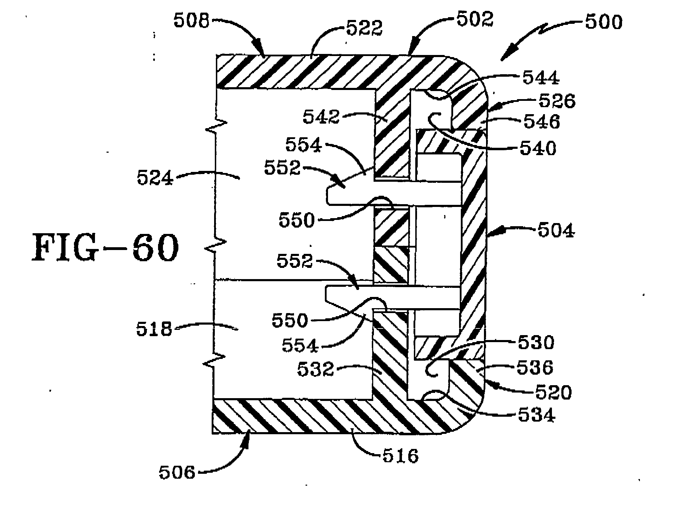

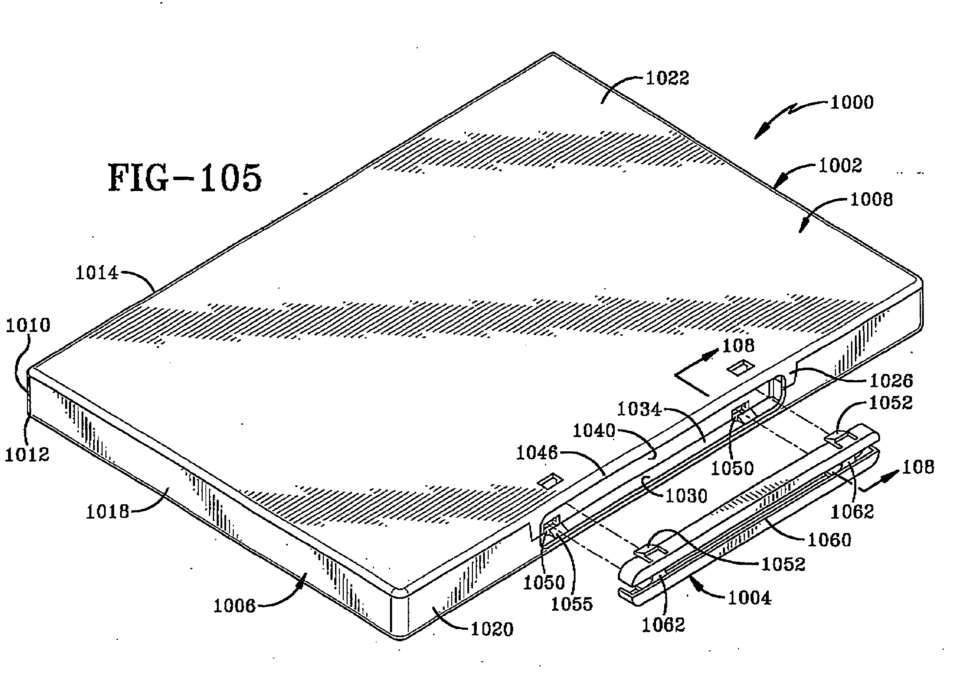

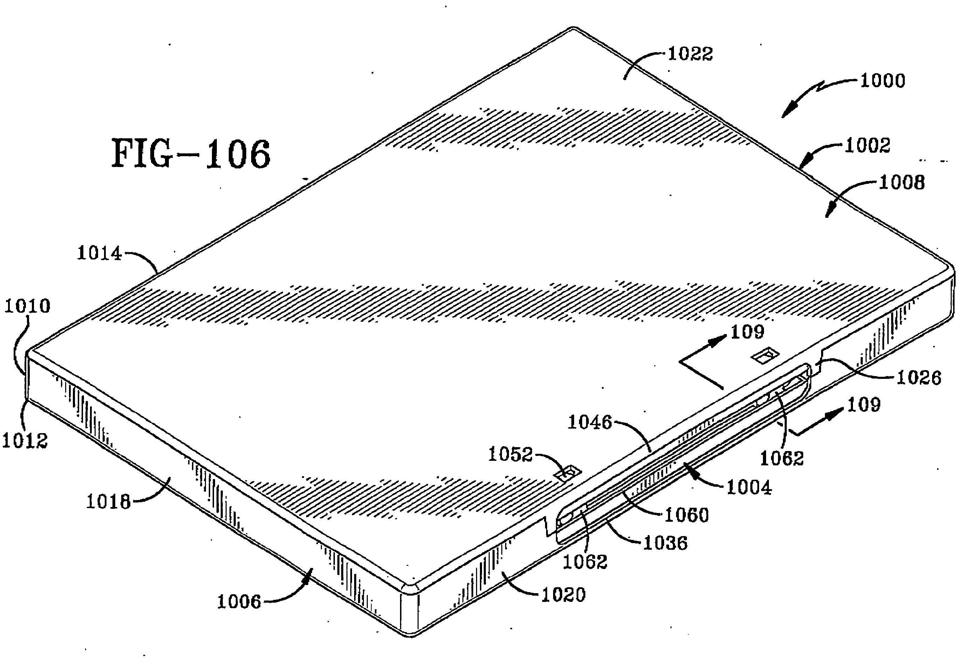

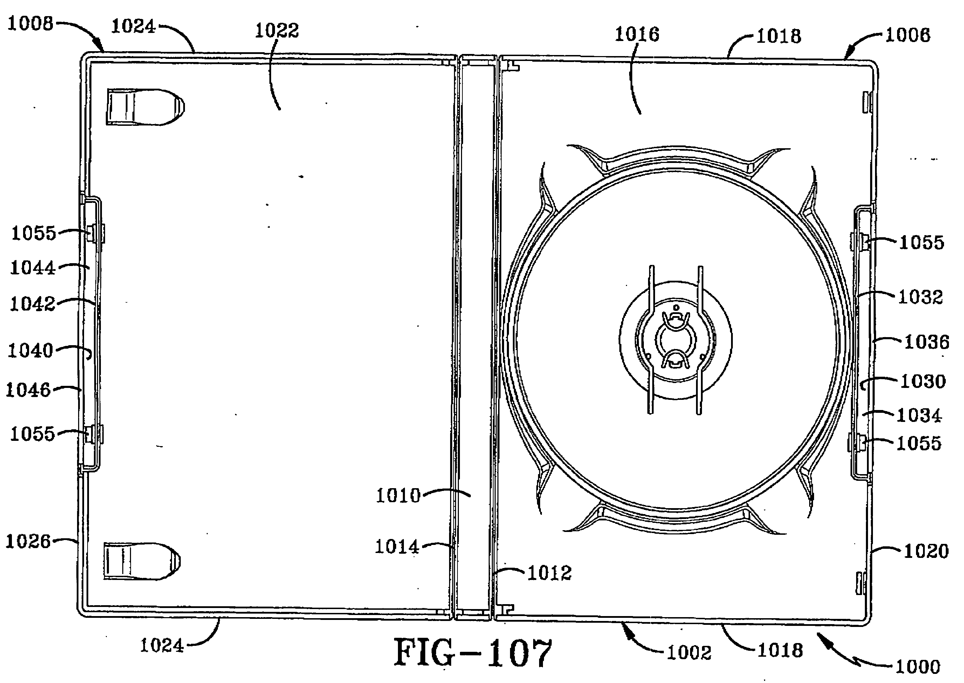

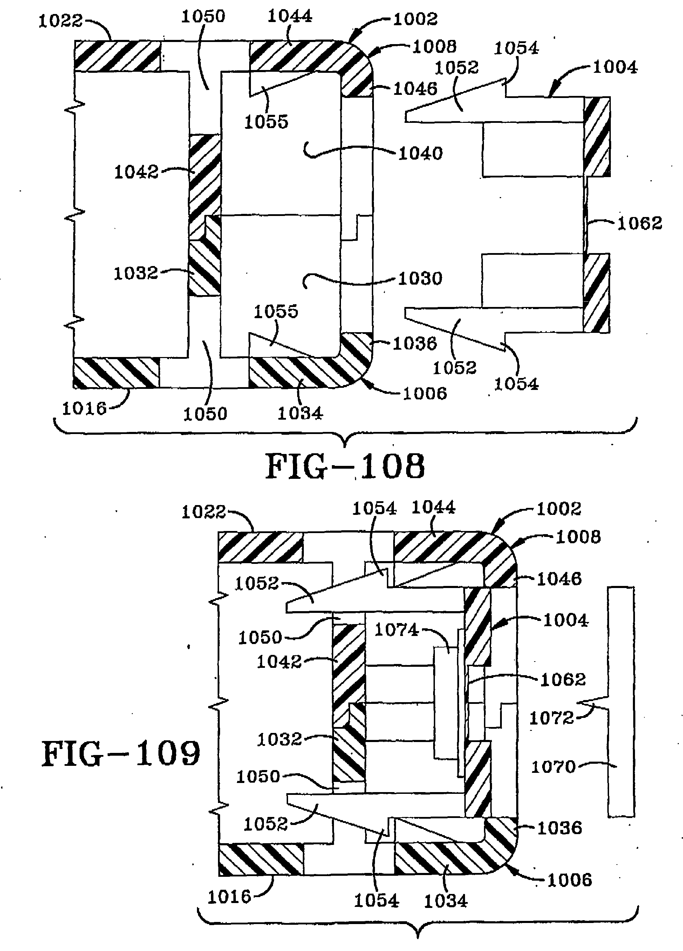

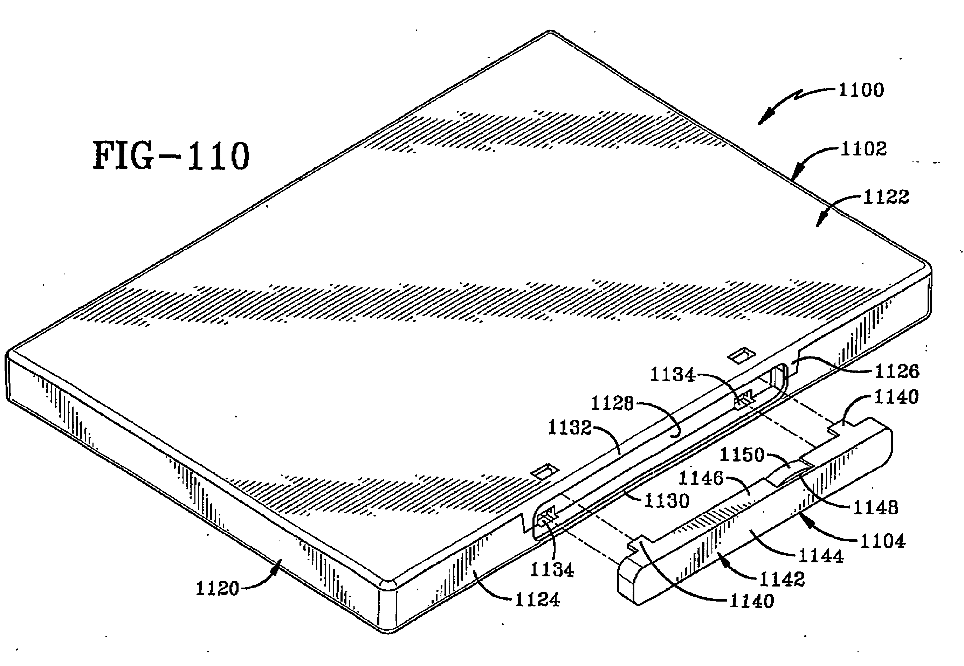

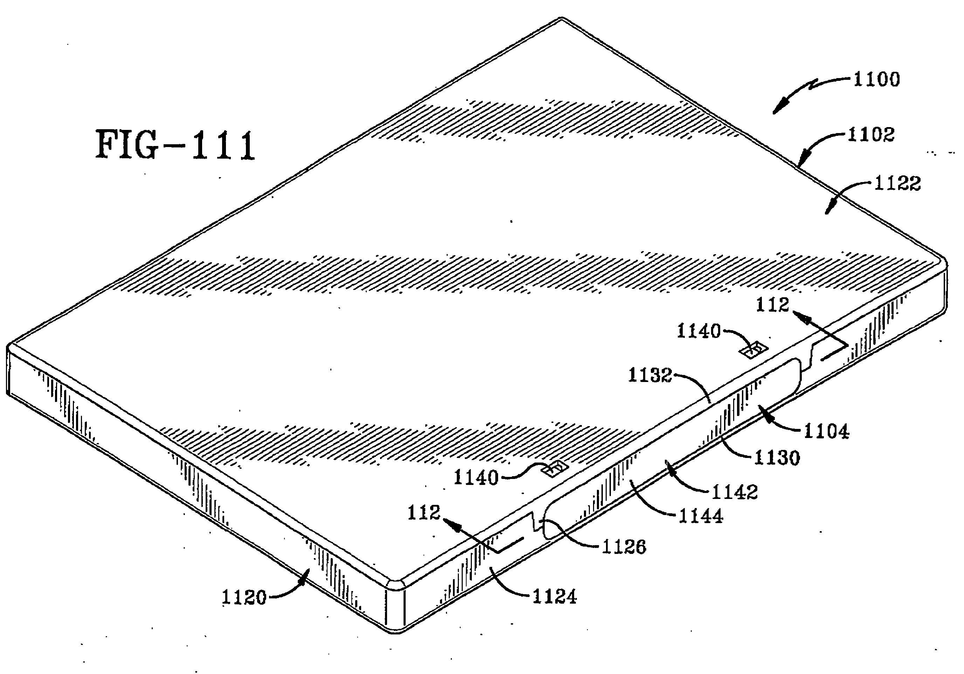

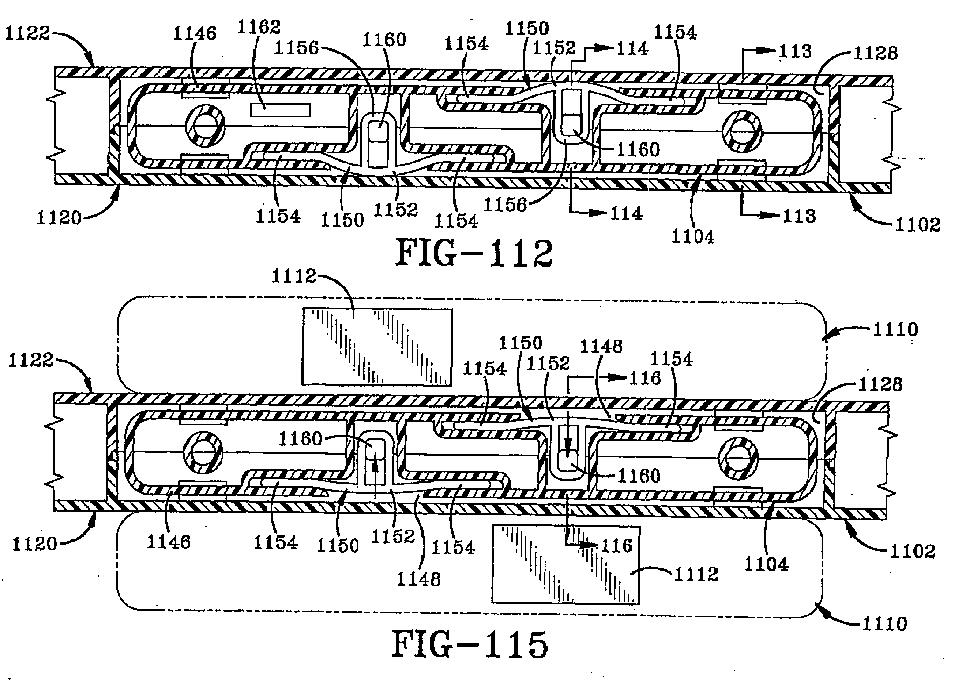

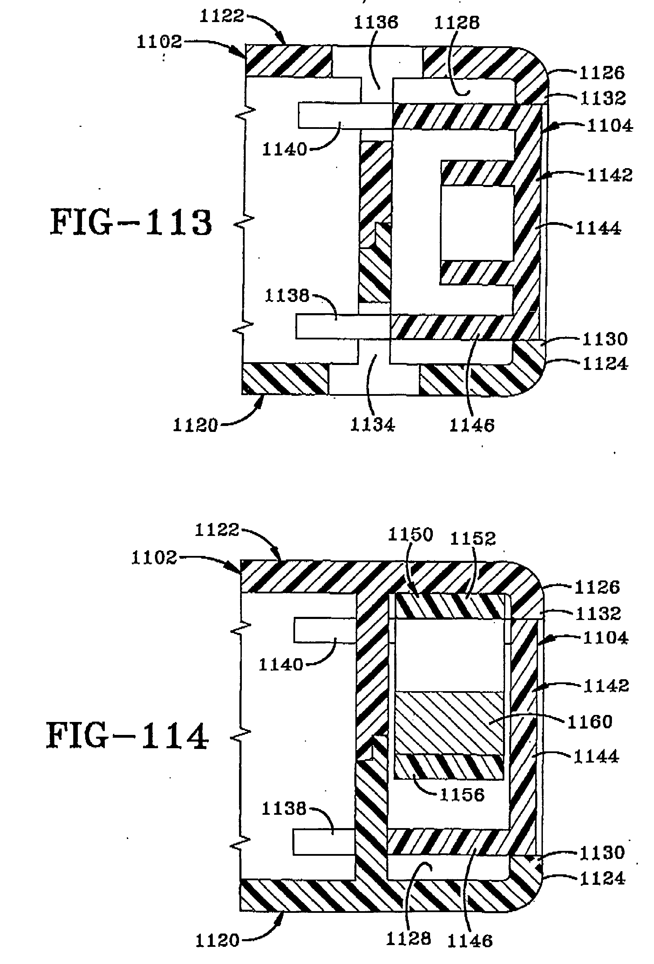

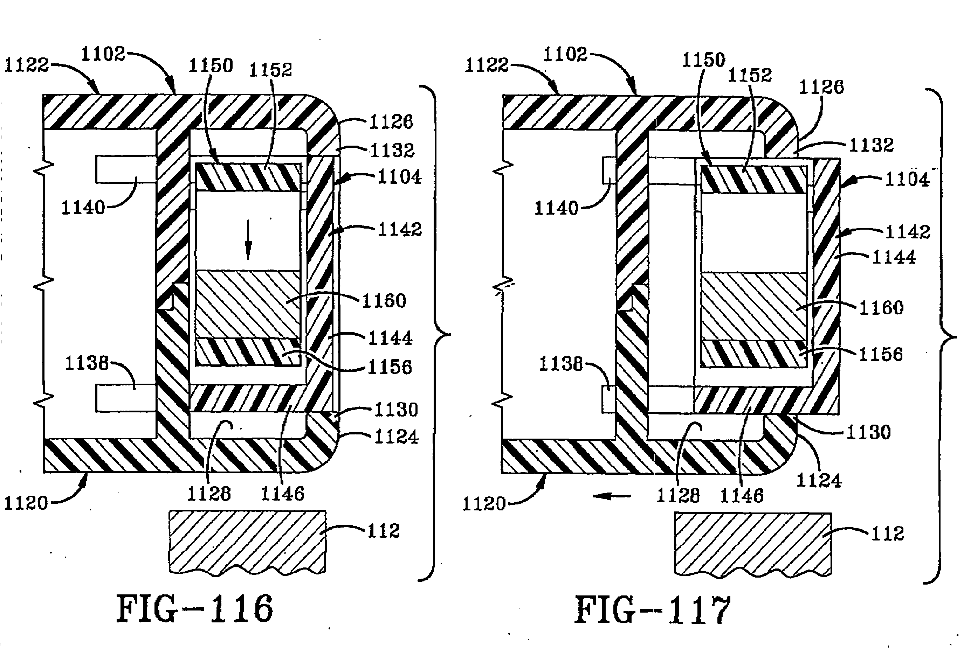

Similar numbers refer to similar parts throughout the specification.

### DESCRIPTION OF THE PREFERRED EMBODIMENTS

An embodiment of the security storage container of the present invention is indicated generally by the numeral 500 in Figs. 54-56 and 59-60. Security storage container 500 generally includes a storage container 502 and a lock 504 that is configured to lock storage container 502 in a closed position until lock 504 is removed from container 502. In this example, lock 504 is intended to be sold along with container 502 and the item of recorded media stored therein to the consumer wherein the consumer removes lock 504 and discards lock 504. Lock 504 is thus a single-use lock that is intended to be destroyed when it is removed from storage container 502.

In the examples depicted in the drawings, storage container 502 is configured to hold a disc-shaped item of recorded media such as a CD or a DVD. Storage container 502 may also be configured to hold other types of recorded media such as VHS video cassettes, video game cartridges, cassette tapes, computer discs and the like.

Storage container 502 includes a base 506 and a lid 508. Base 506 includes a hinge wall 510 that hinges base 506 to lid 508. Hinge wall 510 is connected to base 506 with a first living hinge 512. Hinge wall 510 is preferably connected to lid 508 by second living hinge 514. Base 506 and lid 508 cooperate to entirely surround the item of recorded media stored in container 502. Container 502 may include some type of holding device to mount the item of recorded media while the item of recorded media is stored within container 502. The holding device may be one of the numerous hubs known in the art.

Base 506 also includes a bottom wall 516, a pair of sidewalls 518, and a front wall 520. Lid 508 includes a top wall 522, a pair of sidewalls 524, and a front wall 526.

Front wall 520 of base 506 includes a concave indentation 530 that is defined by a rear wall 532 and a lower wall 534. Front wall 520 also includes an upwardly extending lip 536 extending across cavity 530 in front of rear wall 532.

Front wall 526 also includes a cavity 540 that substantially matches cavity 530 described above. Cavity 540 is defined by rear wall 542 and a upper wall 544. Front wall 526 also includes a lip 546 extending across cavity 540 in front of rear wall 542. When lid 508 is in the closed position as depicted in the drawings, cavities 530 and 540 cooperate to form a lock reception cavity configured to entirely receive lock 504. In the preferred embodiment of the invention, lock 504 does not protrude out of the lock reception cavity when lock 504 is in the locked position as depicted in Figs. 56 and 60. In accordance with one of the objectives of the present invention, lock reception cavity is the same concave cavity formed in most existing front walls of existing storage containers.

Security storage container 500 includes at least one, but preferably two, lock holes 550 defined by rear walls 532 and 542. Lock 504 includes lock fingers 552 disposed on lock 504 to engage lock holes 550 when lock 504 is positioned in the lock reception cavity. Each lock finger 552 includes a protuberance 554 that is sized somewhat larger than the diameter or opening of its lock hole 550 so that lock 504 cannot be easily pulled back out of the lock reception cavity once lock fingers 552 and protuberances 554 are snapped through lock holes 550. Protuberances 554 are fabricated from a material that is pliable or flexible enough to be forced through lock holes 550. Each protuberance 554 is configured to have a catch surface that prevents protuberance 554 from being easily pulled back through lock hole 550. In the embodiment depicted in Fig. 56, each protuberance 554 extends entirely around lock finger 552. In the embodiment depicted in Fig. 60, each protuberance 554 extends around only half of lock finger 552.

Lock 504 is configured to be disposed entirely within the lock reception cavity in the preferred embodiments of the invention so that a shoplifter cannot easily grasp lock 504 and pull lock 504 away from container 502. In other embodiments of the invention, lock 504 may be substantially disposed within the lock reception cavity such that portions of lock 504 may extend from the lock reception cavity but those portions would be difficult to grasp by the shoplifter. As shown in Figs. 55 and 59, lock 504 substantially fills the lock reception cavity so that the shoplifter cannot easily insert a thick pry bar between walls 520/526 and lock 504.

When lock 504 is installed by snapping lock fingers 552 through lock holes 550, lid 508 may not be moved from the closed position to an open position without removing lock 504 or destroying another portion of container 502. Lock 504 is designed to be sold to the consumer along with container 502 and the item of recorded media stored in container 502. The consumer removes lock 504 by destroying lock 504. In the embodiment depicted in Figs. 54-56, lock 504 is formed with a centrally disposed opening 560 that allows the consumer to cut lock 504 into two pieces by using a knife or a pair of scissors. Opening 560 allows relatively easy access to lock 504 during the cutting procedure. Lock 504 may additionally include visible cut lines 562 that show the consumer where the cuts must be made to open container 502. Cut lines 562 may be perforations formed in lock 504 or simply lines formed on the outer surface of lock 504. After lock 504 is cut into two pieces, lid 508 may be moved to the open position and the consumer may remove the pieces of lock 504 by pushing lock fingers 552 back through holes 550 or by severing protuberances 554 and removing lock 504.

In the embodiment of the invention depicted in Figs. 59 and 60, lock 504 includes a plurality of spaced, aligned openings 564 that allow the consumer to cut lock 504 into two pieces to allow container 502 to be opened.

Another embodiment of the security storage container of the present invention is indicated generally by the numeral 1000 in Figs. 105-109. Security storage container 1000 generally includes a storage container 1002 and a lock 1004 that is configured to lock storage container 1002 in a closed position until lock 1004 is removed from container 1002. In this embodiment of the invention, lock 1004 may be sold along with container 1002 and the item of recorded media stored therein to the consumer wherein the consumer removes lock 1004 and discards lock 1004. Lock 1004 may also be removed by the retail clerk. In order to be removed, lock 1004 is partially destroyed. Lock 1004 is thus a single-use lock that is discarded after it is removed from storage container 1002.

In the embodiments of the invention depicted in the drawings, storage container 1002 is configured to hold a disc-shaped item of recorded media such as a CD or a DVD. Storage container 1002 may also be configured to hold other types of recorded media such as those described above with respect to the other embodiments of the invention.

Storage container 1002 includes a base 1006 and a lid 1008. Base 1006 includes a hinge wall 1010 that hinges base 1006 to lid 1008. Hinge wall 1010 is connected to base 1006 with a first living hinge 1012. Hinge wall 1010 is preferably connected to lid 1008 by second living hinge 1014. Base 1006 and lid 1008 cooperate to entirely surround the item of recorded media stored in container 1002. Container 1002 may include some type of holding device to mount the item of recorded media while the item of recorded media is stored within container 1002. The holding device may be one of the numerous hubs known in the art.

Base 1006 also includes a bottom wall 1016, a pair of sidewalls 1018, and a front wall 1020. Lid 1008 includes a top wall 1022, a pair of sidewalls 1024, and a front wall 1026.

Front wall 1020 of base 1006 includes a concave indentation 1030 that is defined by a rear wall 1032 and a lower wall 1034. Front wall 1020 also includes an upwardly extending lip 1036 extending across cavity 1030 in front of rear wall 1032.

Front wall 1026 also includes a cavity 1040 that substantially matches cavity 1030 described above. Cavity 1040 is defined by rear wall 1042 and a upper wall 1044. Front wall 1026 also includes a lip 1046 extending across cavity 1040 in front of rear wall 1042. When lid 1008 is in the closed position as depicted in the drawings, cavities 1030 and 1040 cooperate to form a lock reception cavity configured to entirely receive lock 1004. In the preferred embodiment of the invention, lock 1004 does not protrude out of the lock reception cavity when lock 1004 is in the locked position as depicted in Figs. 106 and 109.

Security storage container 1000 includes at least one, but preferably two, lock holes 1050 defined by rear walls 1032 and 1042. Holes 1050 may extend through walls 1016 and 1022. Lock 1004 includes lock fingers 1052 disposed on lock 1004 to engage lock holes 1050 when lock 1004 is positioned in the lock reception cavity. Each lock finger 1052 includes a protuberance 1054 that is configured to snap fit a complementary protuberance 1055 protruding from container 1002. Holes 1050 are configured to prevent fingers 1052 from moving toward each other far enough to become unlocked from container 1002. In other embodiments of the invention, openings 1050 may be larger so that fingers 1052 may be pushed down by a key to disengage fingers 1052 from protuberances 1055. Lock 1004 cannot be easily pulled back out of the lock reception cavity once lock fingers 1052 and protuberances 1054 are snapped in place. Protuberances 1055 may extend from walls 1034 and 1044.

Lock 1004 is configured to be disposed entirely within the lock reception cavity so that a shoplifter cannot easily grasp lock 1004 and pull lock 1004 away from container 1002. In other examples, lock 1004 may be substantially disposed within the lock reception cavity such that portions of lock 1004 may extend from the lock reception cavity but those portions would be difficult to grasp by the shoplifter. As shown in Figs. 106 and 109, lock 1004 substantially fills the lock reception cavity so that the shoplifter cannot easily insert a thick pry bar between walls 1020/1026 and lock 1004.

When lock 1004 is in the locked position, lid 1008 may not be moved from the closed position to an open position without removing lock 1004 or destroying another portion of container 1002. Lock 1004 may be designed to be sold to the consumer along with container 1002 and the item of recorded media stored in container 1002. The consumer removes lock 1004 by destroying lock 1004. Lock 1004 is formed with a centrally disposed opening 1060 with two bars 1062 connecting the opposed sides of lock 1004. The customer cuts bars 1062 to unlock lock 1004. The consumer may cut lock 1004 into two pieces by using a knife or a pair of scissors. Opening 1060 allows relatively easy access to lock 1004 during the cutting procedure. Lock 1004 may also be destroyed by the sales clerk. The sales clerk can cut bars 1062 with scissors or may use a counter-mounter key 1070 (Fig. 109) that includes blades 1072 arranged to cut bars 1062. The clerk would push container 1002 onto key 1070 until bars 1062 are broken. In another embodiment, key fingers would move fingers 1052 to an unlocked position so that lock can be removed. In this embodiment, lock 1004 could be reused.

An EAS tag 1074 may be carried by lock 1004 when the size of tag 1074 and lock 1004 permit.

Another embodiment of the invention is indicated generally by the numeral 1100 in Figs. 110 - 117. Security device 1100 includes a storage container 1102 and a lock 1104 that is configured to lock container 1102 in a closed position. Lock 1104 is configured to fit into the opening formed in the front of container 1102 to hold the lid 1106 of container 1102 to the base 1108. Lock 1104 is magnetically-actuated such that it is moved from the locked position to the unlocked position with a key 1110 having magnets 1112. Lock 1104 is thus reusable and may be removed by a retail clerk when container 1102 is sold to a customer.

Container 1102 generally includes a base 1120 and a lid 1122 hingedly connected to base 1120 and moveable between open and closed positions. Base 1120 and lid 1122 each have sidewalls that extend around the perimeter of container 1102. The sidewalls may abut each other about a medial line of separation or may overlap each other as shown in the drawings. Each of base 1120 and lid 1122 include a front wall 1124, 1126 that defines a portion of a concave opening. These portions cooperate to form a concave opening 1128 in the front of container 1102 when lid 1122 is closed. Front wall 1124 includes a lip 1130 disposed about the bottom of concave opening 1128 and front wall 1126 includes a lip 1132 disposed about the top of concave opening 1128. Lips 1130 and 1132 overhang at least a portion of opening 1128 to provide surfaces for lock 1104 to lock against when lock 1104 is in the locked position as depicted in Fig. 114.

Front wall 1124 defines at least one but preferably a pair of openings 1134 and front wall 1126 defines at least one but preferably a pair of openings 1136. Openings 1134 are configured to receive lock fingers 1138 when lock 1104 is in the locked position. Similarly, openings 1136 are configured to receive lock fingers 1140 when lock 1104 is in the locked position. Fingers 1138 and 1140 are connected to a common body 1142 so that lid 1122 cannot be moved upwardly away from base 1120 when lock 1104 is in the locked position.

Body 1142 includes a front plate 1144 and a perimeter sidewall 1146. Body 1142 is preferably sized to substantially fill opening 1128 so that a shoplifter cannot easily insert a pry bar between container 1102 and lock 1104. Sidewall 1146 defines at least a pair of openings 1148 that allow lock fingers 1150 to protrude through sidewall 1146 when lock 1104 is in the locked position.

Lock fingers 1150 are flexible and are biased to the locked position depicted in Fig. 112. Fingers 1150 may be fabricated from a magnetically-attractable material such as a metal. Fingers 1150 may also be fabricated from a flexible plastic having a memory that causes fingers 1150 to return to the resting or locked position depicted in Fig. 112. Lock fingers 1150 includes curved middle portions 1152 with extending guide legs 1154 extending from each side of middle portion 1152. A guide arm 1156 extends substantially perpendicular from middle portion 1152 with respect to legs 1154. When lock finger 1150 is moved to the unlocked position, curved middle portion 1152 flattens and guide legs 1154 move outwardly. Guide arm 1156 moves down in this position. Legs 1154 are received in slots defined by body 1142 and arm 1156 is received in a slot defined by body 1142.

Each lock finger 1150 includes a magnetically-attractable ball 1160 that is used to move finger 1150 from the locked position to the unlocked position as shown in Figs. 112 and 115. Balls 1160 are moved by magnets 1112 causing fingers 1150 to flex to the unlocked position so that lock 1104 may be removed from opening 1128. When lock fingers 1150 are in the locked position, curved portions 1152 abut lips 1130 and 1132 to prevent lock 1104 from being removed.

Lock 1104 may be configured to receive an EAS tag 1962 (Fig. 112) if desired.

The improved lockable media storage box with lock and key according to the invention is simplified, provides an effective, safe, inexpensive, and efficient device which achieves all the enumerated objectives, provides for eliminating difficulties encountered with prior devices, and solves problems and obtains new results in the art.

Moreover, the description and illustration of the invention is by way of example, and the scope of the invention as claimed is not limited to the exact details shown or described

Having now described the features, discoveries, and principles of the invention, the manner in which the lockable media storage box with lock and key is constructed and used, the characteristics of the construction, and the advantageous new and useful results obtained; the new and useful structures, devices, elements, arrangements, parts, and combinations are set forth in the appended claims.

## Claims

1. A security storage container for holding an item of recorded media comprising:
a base (506, 1006, 1120) adapted to hold an item of recorded media;
a lid (508, 1008, 1122) connected to the base and moveable between open and closed positions;
the base (506, 1006, 1120) and the lid (508, 1008,1122) each including a front wall (520,1020,1124; 526,1026,1126);
the front wall (520,1020,1124) of the base (506, 1006, 1120) including a concave cavity (530, 1030) that is defined by a rear wall (532, 1032) and a lower wall (534, 1034) and also including an upwardly extending lip (536, 1036, 1130) extending across the cavity (530, 1030) in front of the rear wall (532,1032);
the front wall (526, 1026,1126) of the lid also including a cavity (540, 1040) that substantially matches the cavity (530, 1030) of the front wall of the base and is defined by a rear wall (542, 1042) and a upper wall (544, 1044) and also including a lip (546, 1046, 1132) extending across the cavity (540, 1040) of the lid in front of the rear wall (542,1042) of the lid cavity;
such that when the lid (508, 1008, 1122) is in the closed position, the cavities (530, 540; 1030, 1040) cooperate to form a lock reception cavity (1128);
a lock (504, 1004, 1104) having a first lock finger (552, 1052, 1138) and a second lock finger (552, 1052, 1140);
the lock reception cavity being configured to entirely receive the lock (504, 1004, 1104);
**characterised in that**
the rear wall (532,1032) of the cavity (530, 1030) of the base (506, 1006, 1120) defines a locking hole (550,1050,1134); and
the rear wall (542, 1042) of the cavity (540, 1040) of the lid (508, 1008, 1122) defines a locking hole (550,1050,1136);
the first lock finger of the lock (504, 1004, 1104) being disposed in the locking hole (550, 1050, 1134) defined by the rear wall (532, 1032) of the cavity (530, 1030) of the base (506, 1006,1120) when the lock (504, 1004, 1102) is locking the lid (508,1008,1122) in the closed position; and
the second lock finger (552, 1052, 1140) of the lock (504, 1004, 1104) being disposed in the locking hole (550, 1050, 1136) defined by the rear wall (542, 1042) of the cavity (540, 1040) of the lid (508, 1008, 1122) when the lock (504, 1004, 1102) is locking the lid (508, 1008, 1122) in the closed position.

2. The container of claim 1, wherein the lock (504, 1004, 1104) is disposed in the lock reception cavity.

3. The container of claim 2, wherein no portion of the lock (504, 1004, 1104) protrudes outside of the lock reception cavity.

4. The container of claim 2, wherein no substantial portion of the lock (504, 1004, 1104) protrudes outside of the lock reception cavity.

5. The container of claim 1, wherein the lock (504,1004,1104) includes at least a first opening (560, 564; 1060) disposed between the first and second lock fingers (552,1052).

## Patentansprüche

1. Sicherheitsaufbewahrungsbehälter zur Aufbewahrung eines Aufzeichnungsträgers mit
einer zur Aufbewahrung eines Aufzeichnungsträgers geeigneten Basis (506, 1006, 1120),
einem Deckel (508, 1008, 1122), der mit der Basis verbunden ist und zwischen einer offenen und einer geschlossenen Position bewegt werden kann,
wobei die Basis (506, 1006, 1120) und der Deckel (508, 1008, 1122) jeweils eine Stirnwand (520, 1020, 1124; 526, 1026, 1126) aufweisen,
wobei die Stirnwand (520, 1020, 1124) der Basis (506, 1006, 1120) einen konkaven Hohlraum (530, 1030), der durch eine Rückwand (532, 1032) und eine untere Wand (534, 1034) definiert ist, und eine sich nach oben erstreckende Lippe (536, 1036, 1130) aufweist, die sich vor der Rückwand (532, 1032) über den Hohlraum (530, 1030) erstreckt,
wobei die Stirnwand (526, 1026, 1126) des Deckels auch einen Hohlraum (540, 1040), der dem Hohlraum (530, 1030) der Stirnwand der Basis im Wesentlichen entspricht und durch eine Rückwand (542, 1042) und eine obere Wand (544, 1044) definiert ist, sowie eine Lippe (546, 1046, 1132) aufweist, die sich vor der Rückwand (542, 1042) des Deckelhohlraums über den Hohlraum (540, 1040) des Deckels erstreckt,
so dass die Hohlräume (530, 540; 1030, 1040) zur Bildung eines Schlossaufnahmehohlraums (1128) zusammenwirken, wenn der Deckel (508, 1008, 1122) in der geschlossenen Position ist,
einem Schloss (504, 1004, 1104) mit einem ersten Schlossfinger (552, 1052, 1138) und einem zweiten Schlossfinger (552, 1052, 1140),
wobei der Schlossaufnahmehohlraum so konfiguriert ist, dass er das Schloss (504, 1004, 1104) ganz aufnimmt,
**dadurch gekennzeichnet, dass**
die Rückwand (532, 1032) des Hohlraums (530, 1030) der Basis (506, 1006, 1120) ein Verriegelungsloch (550, 1050, 1134) definiert und
die Rückwand (542, 1042) des Hohlraums (540, 1040) des Deckels (508, 1008, 1122) ein Verriegelungsloch (550, 1050, 1136) definiert,
wobei der erste Schlossfinger des Schlosses (504, 1004, 1104) in dem von der Rückwand (532, 1032) des Hohlraums (530, 1030) der Basis (506, 1006, 1120) definierten Verriegelungsloch (550, 1050, 1134) angeordnet ist, wenn das Schloss (504, 1004, 1102) den Deckel (508, 1008, 1122) in der geschlossenen Position verriegelt, und
wobei der zweite Schlossfinger (552, 1052, 1140) des Schlosses (504, 1004, 1104) in dem von der Rückwand (542, 1042) des Hohlraums (540, 1040) des Deckels (508, 1008, 1122) definierten Verriegelungsloch (550, 1050, 1136) angeordnet ist, wenn das Schloss (504, 1004, 1102) den Deckel (508, 1008, 1122) in der geschlossenen Position verriegelt.

2. Behälter nach Anspruch 1, wobei das Schloss (504, 1004, 1104) im Schlossaufnahmehohlraum angeordnet ist.

3. Behälter nach Anspruch 2, wobei kein Abschnitt des Schlosses (504, 1004, 1104) außerhalb des Schlossaufnahmehohlraums vorsteht.

4. Behälter nach Anspruch 2, wobei kein wesentlicher Abschnitt des Schlosses (504, 1004, 1104) außerhalb des Schlossaufnahmehohlraums vorsteht.

5. Behälter nach Anspruch 1, wobei das Schloss (504, 1004, 1104) mindestens eine zwischen dem ersten und dem zweiten Schlossfinger (552, 1052) angeordnete erste Öffnung (560, 564; 1060)aufweist.

## Revendications

1. Conteneur de stockage de sécurité destiné à contenir un élément de support enregistré, comportant :
une base (506, 1006, 1120) prévue pour contenir un élément de support enregistré ;
un couvercle (508, 1008, 1122) relié à la base et mobile entre des positions ouverte et fermée ;
la base (506, 1006, 1120) et le couvercle (508, 1008, 1122) comprenant chacun une paroi avant (520, 1020, 1124 ; 526, 1026, 1126) ;
la paroi avant (520, 1020, 1124) de la base (506, 1006, 1120) comprenant une cavité concave (530, 1030) définie par une paroi arrière (532, 1032) et
une paroi inférieure (534, 1034) et comprenant également un rebord (536, 1036, 1130) s'étendant vers le haut et s'étendant en travers de la cavité (530, 1030) devant la paroi arrière (532, 1032) ;
la paroi avant (526, 1026, 1126) du couvercle comprenant également une cavité (540, 1040) correspondant sensiblement à la cavité (530, 1030) de la paroi avant de la base et définie par une paroi arrière (542, 1042) et une paroi supérieure (544, 1044) et comprenant également un rebord (546, 1046, 1132) s'étendant en travers de la cavité (540, 1040) du couvercle devant la paroi arrière (542, 1042) de la cavité du couvercle ;
de telle sorte que, lorsque le couvercle (508, 1008, 1122) est en position fermée, les cavités (530, 540 ; 1030, 1040) coopèrent pour former une cavité (1128) de logement du verrou ;
un verrou (504, 1004, 1104) doté d'un premier doigt (552, 1052, 1138) de verrou et d'un deuxième doigt (552, 1052, 1140) de verrou ;
la cavité de logement du verrou étant configurée de façon à loger entièrement le verrou (504, 1004, 1104) ;
**caractérisé en ce que**
la paroi arrière (532, 1032) de la cavité (530, 1030) de la base (506, 1006, 1120) définit un trou (550, 1050, 1134) de verrouillage ; et
la paroi arrière (542, 1042) de la cavité (540, 1040) du couvercle (508, 1008, 1122) définit un trou (550, 1050, 1136) de verrouillage ;
le premier doigt (504, 1004, 1104) du verrou étant disposé dans le trou (550, 1050, 1134) de verrouillage défini par la paroi arrière (532, 1032) de la cavité (530, 1030) de la base (506, 1006, 1120) lorsque le verrou (504, 1004, 1104) verrouille le couvercle (508, 1008, 1122) en position fermée ; et
le deuxième doigt (552, 1052, 1140) du verrou (504, 1004, 1104) étant disposé dans le trou (550, 1050, 1136) de verrouillage défini par la paroi arrière (542, 1042) de la cavité (540, 1040) du couvercle (508, 1008, 1122) lorsque le verrou (504, 1004, 1104) verrouille le couvercle (508, 1008, 1122) en position fermée.

2. Conteneur selon la revendication 1, le verrou (504, 1004, 1104) étant disposé dans la cavité de logement du verrou.

3. Conteneur selon la revendication 2, aucune partie du verrou (504, 1004, 1104) ne dépassant hors de la cavité de logement du verrou.

4. Conteneur selon la revendication 2, aucune partie substantielle du verrou (504, 1004, 1104) ne dépassant hors de la cavité de logement du verrou.

5. Conteneur selon la revendication 1, le verrou (504, 1004, 1104) comprenant au moins une première ouverture (560, 564, 1060) disposée entre les premier et deuxième doigts (552, 1052) de verrou.
